(19) Europäisches Patentamt / European Patent Office / Office européen des brevets

(11) **EP 4 404 291 A1**

(12) **EUROPEAN PATENT APPLICATION**
published in accordance with Art. 153(4) EPC

(43) Date of publication:
**24.07.2024 Bulletin 2024/30**

(21) Application number: **22867091.5**

(22) Date of filing: **21.07.2022**

(51) International Patent Classification (IPC):
*H01M 4/13* (2010.01)   *C01B 25/14* (2006.01)
*C01G 23/00* (2006.01)   *C01G 53/00* (2006.01)
*H01M 4/36* (2006.01)   *H01M 4/62* (2006.01)
*H01M 10/052* (2010.01)   *H01M 10/0562* (2010.01)

(52) Cooperative Patent Classification (CPC):
**C01B 25/14; C01G 23/00; C01G 53/00; H01M 4/13;**
**H01M 4/36; H01M 4/62; H01M 10/052;**
**H01M 10/0562; Y02E 60/10**

(86) International application number:
**PCT/JP2022/028285**

(87) International publication number:
**WO 2023/037769 (16.03.2023 Gazette 2023/11)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **13.09.2021 JP 2021148669**

(71) Applicant: **Panasonic Intellectual Property**
**Management Co., Ltd.**
**Kadoma-shi, Osaka 571-0057 (JP)**

(72) Inventors:
• **SUGIMOTO, Yuta**
 **Kadoma-shi, Osaka 571-0057 (JP)**
• **HASHIMOTO, Kazuya**
 **Kadoma-shi, Osaka 571-0057 (JP)**

(74) Representative: **Grünecker Patent- und**
**Rechtsanwälte**
**PartG mbB**
**Leopoldstraße 4**
**80802 München (DE)**

(54) **POSITIVE ELECTRODE MATERIAL, POSITIVE ELECTRODE, AND BATTERY**

(57)    A positive electrode material 10 includes a positive electrode active material 101, a coating layer 102, and a second solid electrolyte 105. The coating layer 102 contains a first solid electrolyte and coats at least a portion of a surface of the positive electrode active material 101. The first solid electrolyte contains Li, Ti, M, and X, where M is at least one selected from the group consisting of metalloid elements and metal elements other than Li or Ti, and X is at least one selected from the group consisting of F, Cl, Br, and I. The second solid electrolyte 105 is in indirect contact with the positive electrode active material 101 with the coating layer 102 disposed between the second solid electrolyte 105 and the positive electrode active material 101. A ratio of a volume of the first solid electrolyte to a total volume of the first solid electrolyte and the second solid electrolyte 105 is greater than or equal to 4% and less than or equal to 45%.

FIG. 1

**Description**

Technical Field

The present disclosure relates to a positive electrode material, a positive electrode, and a battery.

Background Art

Patent Literature 1 discloses a method for producing a composite active material. The method includes coating a positive electrode active material with an oxide solid electrolyte and, further, with a sulfide solid electrolyte.

Citation List

Patent Literature

PTL 1: Japanese Unexamined Patent Application Publication No. 2016-18735

Summary of Invention

In the related art, there is a need for inhibiting an increase in an internal resistance of a battery.
The present disclosure provides a positive electrode material including a positive electrode active material, a coating layer, and a second solid electrolyte. The coating layer contains a first solid electrolyte and coats at least a portion of a surface of the positive electrode active material. The first solid electrolyte contains Li, Ti, M, and X, where M is at least one selected from the group consisting of metalloid elements and metal elements other than Li or Ti, and X is at least one selected from the group consisting of F, Cl, Br, and I. The second solid electrolyte is in indirect contact with the positive electrode active material with the coating layer disposed between the second solid electrolyte and the positive electrode active material. A ratio of a volume of the first solid electrolyte to a total volume of the first solid electrolyte and the second solid electrolyte is greater than or equal to 4% and less than or equal to 45%.
With the present disclosure, an increase in an internal resistance of a battery can be inhibited.

Brief Description of Drawings

[Fig. 1] Fig. 1 is a cross-sectional view illustrating a schematic configuration of a positive electrode material according to a first embodiment.
[Fig. 2] Fig. 2 is a cross-sectional view illustrating a schematic configuration of a positive electrode material according to a modification.
[Fig. 3] Fig. 3 is a cross-sectional view illustrating a schematic configuration of a battery according to a second embodiment.
[Fig. 4A] Fig. 4A is a graph showing a Cole-Cole plot obtained in an electrochemical impedance measurement performed on a battery of Example 1 before charge-discharge cycles.
[Fig. 4B] Fig. 4B is a graph showing a Cole-Cole plot obtained in an electrochemical impedance measurement performed on the battery of Example 1 after the charge-discharge cycles.

Description of Embodiments

(Underlying Knowledge Forming Basis of the Present Disclosure)

When a battery that uses a solid electrolyte is repeatedly charged and discharged, oxygen may be evolved from a positive electrode active material. The oxygen that has been evolved oxidizes the solid electrolyte and, consequently, increases an internal resistance of the battery. The increase in the internal resistance results in a number of problems, such as a reduction in an output voltage, heat generation in the battery, and a reduction in a discharge capacity. Accordingly, there is a need for a technology suitable for inhibiting the increase in the internal resistance of a battery that uses a solid electrolyte.

(Overview of Aspects of the Present Disclosure)

According to a first aspect of the present disclosure, a positive electrode material includes

a positive electrode active material;
a coating layer containing a first solid electrolyte and coating at least a portion of a surface of the positive electrode active material; and
a second solid electrolyte, in which
the first solid electrolyte contains Li, Ti, M, and X, where M is at least one selected from the group consisting of metalloid elements and metal elements other than Li or Ti, and X is at least one selected from the group consisting of F, Cl, Br, and I,
the second solid electrolyte is in indirect contact with the positive electrode active material with the coating layer disposed between the second solid electrolyte and the positive electrode active material, and
a ratio of a volume of the first solid electrolyte to a total volume of the first solid electrolyte and the second solid electrolyte is greater than or equal to 4% and less than or equal to 45%.

With the positive electrode material of the first aspect, an increase in an internal resistance of a battery can be inhibited.

In a second aspect of the present disclosure, the positive electrode material according to the first aspect may be one in which, for example, the ratio is greater than or equal to 4.8%. With this configuration, the increase in the internal resistance of a battery can be further inhibited.

In a third aspect of the present disclosure, the positive electrode material according to the first or second aspect may be one in which, for example, the ratio is less than or equal to 41.2%. With this configuration, the increase in the internal resistance of a battery can be further inhibited.

In a fourth aspect of the present disclosure, the positive electrode material according to the first aspect may be one in which, for example, the ratio is greater than or equal to 8%. With this configuration, the increase in the internal resistance of a battery can be further inhibited.

In a fifth aspect of the present disclosure, the positive electrode material according to the first or second aspect may be one in which, for example, the ratio is less than or equal to 30%. With this configuration, the increase in the internal resistance of a battery can be further inhibited.

In a sixth aspect of the present disclosure, the positive electrode material according to any one of the first to fifth aspects may be one in which, for example, the second solid electrolyte contains Li and S. Sulfide solid electrolytes have high ionic conductivity and, therefore, can improve charge-discharge efficiency of a battery. On the other hand, sulfide solid electrolytes exhibit poor oxidation resistance in some cases. In the instance where the second solid electrolyte that is included in a battery includes a sulfide solid electrolyte, the application of the technology of the present disclosure can produce a superior effect in improving the safety of the battery.

In a seventh aspect of the present disclosure, the positive electrode material according to any one of the first to sixth aspects may be one in which, for example, M includes at least one selected from the group consisting of Ca, Mg, Al, Y, and Zr. In the instance where M includes at least one selected from the group consisting of Ca, Mg, Al, Y, and Zr, a halide solid electrolyte exhibits high ionic conductivity.

In an eighth aspect of the present disclosure, the positive electrode material according to any one of the first to seventh aspects may be one in which, for example, M includes Al. In the instance where M includes Al, a halide solid electrolyte exhibits high ionic conductivity.

In a ninth aspect of the present disclosure, the positive electrode material according to any one of the first to eighth aspects may be one in which, for example, the first solid electrolyte is represented by Formula 1, shown below, in which $\alpha$, $\beta$, $\gamma$, and $\delta$ are each independently a value greater than 0. In the instance where a halide solid electrolyte represented by Formula 1 is used in a battery, power characteristics of the battery can be improved.

$$Li_\alpha Ti_\beta M_\gamma X_\delta \qquad \text{(Formula 1)}$$

In a tenth aspect of the present disclosure, the positive electrode material according to any one of the first to ninth aspects may be one in which, for example, the coating layer includes a first coating layer and a second coating layer, the first coating layer contains the first solid electrolyte, and the second coating layer contains a base material; and the first coating layer is located outside of the second coating layer. With this configuration, the charge-discharge efficiency of a battery can be improved.

In an eleventh aspect of the present disclosure, the positive electrode material according to the tenth aspect may be one in which, for example, the base material contains an oxide solid electrolyte having lithium ion conductivity. In the instance where an oxide solid electrolyte is used as the base material, the charge-discharge efficiency of a battery can be further improved.

In a twelfth aspect of the present disclosure, the positive electrode material according to the tenth or eleventh aspect may be one in which, for example, the base material contains lithium niobate. With this configuration, the charge-discharge efficiency of a battery can be improved.

According to a thirteenth aspect of the present disclosure, a positive electrode includes the positive electrode material according to any one of the first to twelfth aspects. With this configuration, an increase in the internal resistance of a battery can be inhibited.

According to a fourteenth aspect of the present disclosure, a battery includes the positive electrode of the thirteenth aspect. With the present disclosure, an increase in the internal resistance of the battery can be inhibited.

Embodiments of the present disclosure will be described below with reference to the drawings. The present disclosure is not limited to the embodiments described below.

(First Embodiment)

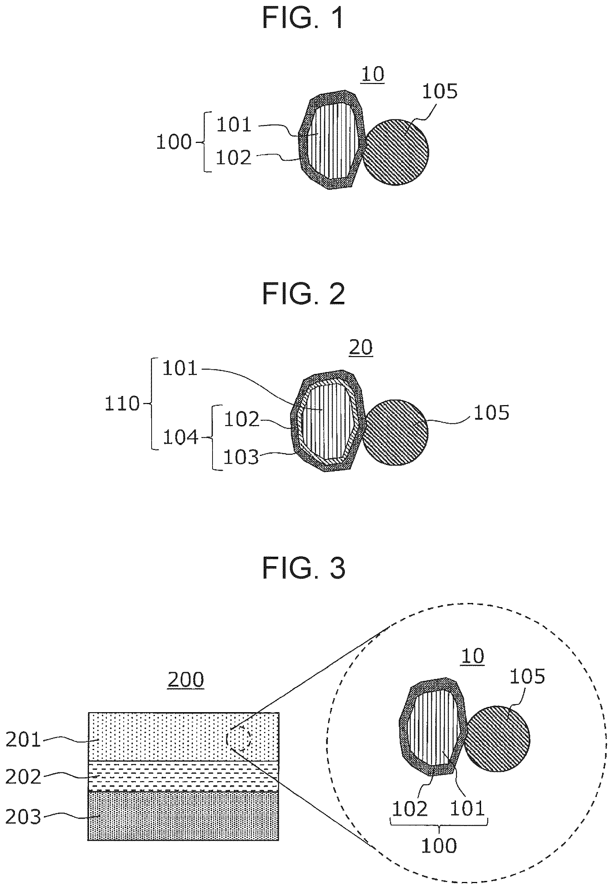

Fig. 1 is a cross-sectional view illustrating a schematic configuration of a positive electrode material according to a first embodiment. A positive electrode material 10 includes a positive electrode active material 101, a coating layer 102, and a second solid electrolyte 105. The coating layer 102 contains a first solid electrolyte. The coating layer 102 coats at least a portion of a surface of the positive electrode active material 101. The coating layer 102 may coat only a portion of the surface of the positive electrode active material 101 or uniformly coat the surface of the positive electrode active material 101. The positive electrode active material 101 and the coating layer 102 constitute a coated active material 100. The second solid electrolyte 105 is in indirect contact with the positive electrode active material 101 with the coating layer 102 disposed between the second solid electrolyte 105 and the positive electrode active material 101.

In the coating layer 102, the first solid electrolyte contains Li, Ti, M, and X. M is at least one selected from the group consisting of metalloid elements and metal elements other than Li or Ti. X is at least one selected from the group consisting of F, Cl, Br, and I. In the positive electrode material 10, a ratio V1/Vt, which is a ratio of V1 to Vt, is greater than or equal to 4% and less than or equal to 45%, as expressed in a percentage, where V1 is a volume of the first solid electrolyte, and Vt is a total volume of the first solid electrolyte and the second solid electrolyte 105.

The metalloid elements include B, Si, Ge, As, Sb, and Te.

The metal elements include all the elements other than hydrogen from Groups 1 to 12 of the periodic table and all the elements other than B, Si, Ge, As, Sb, Te, C, N, P, O, S, or Se from Groups 13 to 16. That is, the metal elements are elements that can become a cation in instances in which any of the elements forms an inorganic compound with a halogen compound.

The first solid electrolyte may be a solid electrolyte containing a halogen, that is, a so-called halide solid electrolyte. Halide solid electrolytes have excellent oxidation resistance. Accordingly, coating the positive electrode active material 101 with the first solid electrolyte can inhibit oxidation of the second solid electrolyte 105. Consequently, an increase in an internal resistance of a battery that uses the positive electrode material 10 can be inhibited.

If the ratio V1/Vt is excessively low, the positive electrode active material 101 is not sufficiently coated with the first solid electrolyte, and, therefore, the above-described effect may not be sufficiently produced. If the ratio V1/Vt is excessively high, concerns arise that the positive electrode material 10 may have insufficient electron conductivity and that the positive electrode material 10 may have insufficient ionic conductivity. The ratio V1/Vt may be greater than or equal to 4.8% or greater than or equal to 8%. The ratio V1/Vt may be less than or equal to 41.2% or less than or equal to 30%.

The total volume Vt of the first solid electrolyte and the second solid electrolyte 105 is a sum of the volume V1 of the first solid electrolyte and a volume V2 of the second solid electrolyte 105. The volume V1 of the first solid electrolyte is a total volume of the first solid electrolyte in a powder of the positive electrode material 10. The volume V2 of the second solid electrolyte 105 is a total volume of the second solid electrolyte 105 in the powder of the positive electrode material 10. That is, the ratio V1/Vt is a value determined based on an entirety of a specific amount of the powder of the positive electrode material 10.

The ratio V1/Vt can be calculated from amounts of charge of the materials or can be calculated in the following manner. Specifically, a cross section of a positive electrode that uses the positive electrode material 10 is examined with a scanning electron microscope (SEM-EDX), and two-dimensional elemental mapping images are acquired. Measurement conditions for the scanning electron microscope used to acquire the two-dimensional mapping images include, for example, a magnification of 1000× to 3000× and an acceleration voltage of 5 kV. The two-dimensional mapping images are acquired at a resolution of 1280×960. The volume of the positive electrode active material 101, the volume V1 of the first solid electrolyte, and the volume V2 of the second solid electrolyte 105 can be determined by analyzing the two-dimensional elemental mapping images and using the number of pixels corresponding to the elements present in the positive electrode active material 101, the first solid electrolyte, and the second solid electrolyte 105.

In the positive electrode material 10, the second solid electrolyte 105 and the coated active material 100 may be in contact with each other. In this case, the first solid electrolyte and the second solid electrolyte 105 are in contact with each other. The positive electrode material 10 may include particles of a plurality of second solid electrolytes 105 and particles of a plurality of coated active materials 100.

In the positive electrode material 10, a ratio "v1:(100 - v1)", which is a ratio between a volume of the positive electrode active material 101 and a volume of the solid electrolytes, may satisfy $30 \leq v1 \leq 95$. When $30 \leq v1$ is satisfied, a sufficient energy density of a battery is ensured. When $v1 \leq 95$ is satisfied, a high-power operation of a battery can be achieved. The volume of the solid electrolytes is the total volume of the first solid electrolyte and the second solid electrolyte 105.

<Positive Electrode Active Material>

The positive electrode active material 101 includes a material that has a property of occluding and releasing metal ions (e.g., lithium ions). Examples of the positive electrode active material 101 include lithium transition metal oxides, transition metal fluorides, polyanionic materials, fluorinated polyanionic materials, transition metal sulfides, transition metal oxysulfides, and transition metal oxynitrides. In particular, in instances where a lithium transition metal oxide is used as the positive electrode active material 101, the cost of production of a battery can be reduced, and an average discharge voltage can be increased. Examples of the lithium transition metal oxides include $Li(Ni,Co,Al)O_2$, $Li(Ni,Co,Mn)O_2$, and $LiCoO_2$.

The positive electrode active material 101 has a shape of particles, for example. The shape of the particles of the positive electrode active material 101 is not particularly limited. The shape of the particles of the positive electrode active material 101 may be a spherical shape, an ellipsoidal shape, a flake shape, or a fiber shape.

The coated active material 100 may have a median diameter of greater than or equal to 0.1 $\mu$m and less than or equal to 100 $\mu$m. When the median diameter of the coated active material 100 is greater than or equal to 0.1 $\mu$m, the coated active material 100 and the second solid electrolyte 105 can form a favorable state of dispersion in the positive electrode material 10. As a result, charge-discharge characteristics of a battery are improved. When the median diameter of the coated active material 100 is less than or equal to 100 $\mu$m, a sufficient lithium diffusion rate is ensured in the coated active material 100. Consequently, a high-power operation of a battery can be achieved.

The median diameter of the coated active material 100 may be greater than the median diameter of the second solid electrolyte 105. In this case, the coated active material 100 and the second solid electrolyte 105 can form a favorable state of dispersion.

In this specification, the "median diameter" is a particle diameter corresponding to a cumulative volume of 50% in a volume-based particle size distribution. The volume-based particle size distribution is measured, for example, with a laser diffraction analyzer or an image analyzer.

<Coating Layer>

The coating layer 102 contains the first solid electrolyte. The first solid electrolyte has an ionic conductivity. Typically, the ionic conductivity is a lithium ion conductivity. The coating layer 102 is disposed on the surface of the positive electrode active material 101. The coating layer 102 may contain the first solid electrolyte as a major component or may contain only the first solid electrolyte. The term "major component" refers to a component that is present in the largest amount in terms of a mass ratio. The expression "contain only the first solid electrolyte" means that no intentionally added materials other than the first solid electrolyte are present while incidental impurities may be present. Examples of the incidental impurities include raw materials for the first solid electrolyte and by-products that are formed during the preparation of the first solid electrolyte. A ratio of a mass of the incidental impurities to a total mass of the coating layer 102 may be less than or equal to 5%, less than or equal to 3%, less than or equal to 1%, or less than or equal to 0.5%.

The first solid electrolyte is a material containing Li, Ti, M, and X. M and X are as described above. Such materials have excellent ionic conductivity and oxidation resistance. Accordingly, the coated active material 100, which includes the coating layer 102 that contains the first solid electrolyte, improves charge-discharge efficiency of a battery and thermal stability of the battery.

M may include at least one selected from the group consisting of Ca, Mg, Al, Y, and Zr. With this configuration, a halide solid electrolyte exhibits high ionic conductivity.

M may include Al (=aluminum). That is, the metal element that is included in the halide solid electrolyte may be Al. In the instance where M includes Al, the halide solid electrolyte exhibits high ionic conductivity.

M may be Al so that the ionic conductivity of the halide solid electrolyte can be further increased.

The halide solid electrolyte that serves as the first solid electrolyte is, for example, represented by Formula 1, shown below. In Formula 1, $\alpha$, $\beta$, $\gamma$, and $\delta$ are each independently a value greater than 0.

$$Li_\alpha Ti_\beta M_\gamma X_\delta \qquad \text{(Formula 1)}$$

Halide solid electrolytes represented by Formula 1 have higher ionic conductivity than halide solid electrolytes formed only of Li and a halogen element, such as LiI. Accordingly, in instances where a halide solid electrolyte represented by Formula 1 is used in a battery, the charge-discharge efficiency of the battery can be improved.

The halide solid electrolyte may consist essentially of Li, Ti, Al, and X. The expression "the halide solid electrolyte consists essentially of Li, Ti, Al, and X" means that a molar ratio of a sum of the amounts of substance (i.e., a molar fraction) of Li, Ti, Al, and X to a sum of the amounts of substance of all the elements that form the halide solid electrolyte is greater than or equal to 90%. In one example, the molar ratio (i.e., molar fraction) may be greater than or equal to 95%. The halide solid electrolyte may consist only of Li, Ti, Al, and X.

In the halide solid electrolyte, a ratio of the amount of substance of Li to a sum of the amounts of substance of Ti and Al may be greater than or equal to 1.12 and less than or equal to 5.07 so that the ionic conductivity of the first solid electrolyte can be further increased.

The halide solid electrolyte that serves as the first solid electrolyte may be represented by Formula 2, shown below.

$$Li_{6-(4-x)b}(Ti_{1-x}Al_x)_bF_6 \qquad \text{(Formula 2)}$$

In Formula 2, $0 < x < 1$ and $0 < b \leq 1.5$ are satisfied. Halide solid electrolytes having such a composition have high ionic conductivity.

In Formula 2, $0.1 \leq x \leq 0.9$ may be satisfied so that the ionic conductivity of the halide solid electrolyte can be further increased.

In Formula 2, $0.1 \leq x \leq 0.7$ may be satisfied.

In Formula 2, the upper limit and the lower limit of the range of x may be defined by any combination of values selected from 0.1, 0.3, 0.4, 0.5, 0.6, 0.67, 0.7, 0.8, and 0.9.

In Formula 2, $0.8 \leq b \leq 1.2$ may be satisfied so that the ionic conductivity of the halide solid electrolyte can be further increased.

In Formula 2, the upper limit and the lower limit of the range of b may be defined by any combination of values selected from 0.8, 0.9, 0.94, 1.0, 1.06, 1.1, and 1.2.

The halide solid electrolyte may be crystalline or amorphous.

The coating layer 102 has a thickness of, for example, greater than or equal to 1 nm and less than or equal to 500 nm. In the instance where the thickness of the coating layer 102 is appropriately adjusted, contact between the positive electrode active material 101 and the second solid electrolyte 105 can be sufficiently inhibited. The thickness of the coating layer 102 can be determined as follows: a thin specimen is prepared from the coated active material 100 with a method such as ion milling, and a cross section of the coated active material 100 is examined with a transmission electron microscope. An average of thicknesses, which may be measured at several random positions (e.g., five points), can be taken as the thickness of the coating layer 102.

The halide solid electrolyte may be a sulfur-free solid electrolyte. In this instance, the formation of a sulfur-containing gas, such as a hydrogen sulfide gas, from the solid electrolyte can be avoided. The "sulfur-free solid electrolyte" is a solid electrolyte that is represented by a formula that does not include the sulfur element. Accordingly, solid electrolytes containing a very small amount of sulfur, for example, solid electrolytes having a sulfur content of less than or equal to 0.1 mass%, are classified into the "sulfur-free solid electrolyte". The halide solid electrolyte may contain an additional anion, in addition to the anion of the halogen element. The additional anion may be that of oxygen.

The halide solid electrolyte has a shape that is not particularly limited. Examples of the shape of the halide solid electrolyte include needle shapes, spherical shapes, and ellipsoidal shapes. For example, the shape of the halide solid electrolyte may be a particle shape.

When the shape of the halide solid electrolyte is, for example, a particle shape (e.g., a spherical shape), the halide solid electrolyte may have a median diameter of greater than or equal to 0.01 $\mu$m and less than or equal to 100 $\mu$m.

<Method for Producing Halide Solid Electrolyte>

The halide solid electrolyte can be produced in the following manner. Described below is an example of a method for producing a halide solid electrolyte represented by Formula 1.

Raw material powders of halides are provided in accordance with a desired composition. The halides may each be a compound of three elements including a halogen element. For example, in instances where $Li_{2.7}Ti_{0.3}Al_{0.7}F_6$ is to be prepared, raw material powders of LiF, $TiF_4$, and $AlF_3$ are to be provided in a molar ratio of approximately 2.7:0.3:0.7. In this instance, the elemental species of M and X in Formula 1 can be determined by appropriate selection of the types of the raw material powders. The values of $\alpha$, $\beta$, $\gamma$, and $\delta$ in Formula 1 can be adjusted by adjusting the types of the raw material powders, a compounding ratio between the raw material powders, and a synthesis process. The raw material powders may be mixed together in a pre-adjusted molar ratio such that a compositional change that can occur in the synthesis process can be offset.

The raw material powders are mixed and ground together, and subsequently, the raw material powders are reacted with one another with a mechanochemical milling method, to produce a reaction product. The reaction product may be heat-treated in a vacuum or an inert atmosphere. Alternatively, after the raw material powders are mixed and ground together, the raw material powders may be heat-treated in a vacuum or an inert atmosphere, to produce a reaction product. The heat treatment is performed, for example, at a temperature of greater than or equal to 100°C and less than or equal to 400°C for 1 hour or more. The raw material powders may be heat-treated in a sealed vessel, such as a quartz tube, so that a compositional change that may occur during the heat treatment can be inhibited. Through these steps, the halide solid electrolyte can be prepared.

The constitution of the crystalline phase (i.e., crystal structure) of the halide solid electrolyte can be adjusted and determined by the method with which the raw material powders are reacted with one another and the conditions for the reaction.

<Second Solid Electrolyte>

The second solid electrolyte 105 may include at least one selected from the group consisting of a halide solid electrolyte, a sulfide solid electrolyte, an oxide solid electrolyte, a polymeric solid electrolyte, and a complex hydride solid electrolyte.

Examples of the halide solid electrolyte include the above-described materials of the first solid electrolyte. That is, the second solid electrolyte 105 may have a composition that is the same as or different from the composition of the first solid electrolyte.

The oxide solid electrolyte is a solid electrolyte containing oxygen. The oxide solid electrolyte may contain an additional anion, in addition to the oxygen anion. The additional anion may be an anion other than that of sulfur or those of halogen elements.

Examples of the oxide solid electrolyte include NASICON-type solid electrolytes, typified by $LiTi_2(PO_4)_3$ and element-substituted derivatives thereof; (LaLi)$TiO_3$-system perovskite-type solid electrolytes; LISICON-type solid electrolytes, typified by $Li_{14}ZnGe_4O_{16}$, $Li_4SiO_4$, $LiGeO_4$, and element-substituted derivatives thereof; garnet-type solid electrolytes, typified by $Li_7La_3Zr_2O_{12}$ and element-substituted derivatives thereof; $Li_3PO_4$ and N-substituted derivatives thereof; and glass or glass-ceramics including a Li-B-O compound-containing base material and one or more additional materials, in which examples of the Li-B-O compound include $LiBO_2$ and $Li_3BO_3$, and examples of the additional materials include $Li_2SO_4$ and $Li_2CO_3$.

Examples of the polymeric solid electrolyte include a compound of a polymeric compound and a lithium salt. The polymeric compound may have an ethylene oxide structure. Polymeric compounds having an ethylene oxide structure can contain large amounts of a lithium salt. Accordingly, the ionic conductivity can be further increased. Examples of the lithium salt include $LiPF_6$, $LiBF_4$, $LiSbF_6$, $LiAsF_6$, $LiSO_3CF_3$, $LiN(SO_2F)_2$, $LiN(SO_2CF_3)_2$, $LiN(SO_2C_2F_5)_2$, $LiN(SO_2CF_3)(SO_2C_4F_9)$, and $LiC(SO_2CF_3)_3$. One lithium salt selected from these may be used alone, or a mixture of two or more lithium salts selected from these may be used.

Examples of the complex hydride solid electrolyte include $LiBH_4$-LiI and $LiBH_4$-$P_2S_5$.

The second solid electrolyte 105 may contain Li and S. In other words, the second solid electrolyte 105 may contain a sulfide solid electrolyte. Sulfide solid electrolytes have high ionic conductivity and, therefore, can improve the charge-discharge efficiency of a battery. On the other hand, sulfide solid electrolytes exhibit poor oxidation resistance in some cases. In the instance where the second solid electrolyte 105 that is included in a battery includes a sulfide solid electrolyte, the application of the technology of the present disclosure can produce a superior effect in improving the safety of the battery.

Examples of the sulfide solid electrolyte include $Li_2S$-$P_2S_5$, $Li_2S$-$SiS_2$, $Li_2S$-$B_2S_3$, $Li_2S$-$GeS_2$, $Li_{3.25}Ge_{0.25}P_{0.75}S_4$, and $Li_{10}GeP_2S_{12}$. To any of these, LiX, $Li_2O$, $MO_q$, $Li_pMO_q$, and/or the like may be added. In the LiX, X is at least one selected from the group consisting of F, Cl, Br, and I. In the $MO_q$ and $Li_pMO_q$, the element M is at least one selected from the group consisting of P, Si, Ge, B, Al, Ga, In, Fe, and Zn. In the $MO_q$ and $Li_pMO_q$, p and q are each independently a natural number.

The second solid electrolyte 105 may include two or more of the above-mentioned materials of solid electrolytes. For example, the second solid electrolyte 105 may include a halide solid electrolyte and a sulfide solid electrolyte.

The second solid electrolyte 105 may have a lithium ion conductivity higher than the lithium ion conductivity of the first solid electrolyte.

The second solid electrolyte 105 may contain incidental impurities, such as starting materials used in the synthesis of the solid electrolyte, by-products, and decomposition products. The same applies to the first solid electrolyte.

<Other Materials>

A binding agent may be included in the positive electrode material 10 to improve adhesion between particles. The binding agent is used to improve the binding properties of the materials that form the positive electrode. Examples of the binding agent include polyvinylidene fluoride, polytetrafluoroethylene, polyethylene, polypropylene, aramid resins, polyamides, polyimides, polyamide-imides, polyacrylonitrile, polyacrylic acids, poly(methyl acrylate), poly(ethyl acrylate), poly(hexyl acrylate), polymethacrylic acids, poly(methyl methacrylate), poly(ethyl methacrylate), poly(hexyl methacrylate), polyvinyl acetate, polyvinylpyrrolidone, polyethers, polycarbonates, polyether sulfones, polyetherketones, polyetheretherketones, polyphenylene sulfides, hexafluoropolypropylene, styrene butadiene rubber, carboxymethyl cellulose, and ethyl cellulose. The binding agent may be a copolymer of two or more monomers selected from the group consisting of tetrafluoroethylene, hexafluoroethylene, hexafluoropropylene, perfluoroalkyl vinyl ether, vinylidene fluoride, chlorotrifluoroethylene, ethylene, propylene, butadiene, styrene, pentafluoropropylene, fluoromethyl vinyl ether, acrylic acid esters, acrylic acids, and hexadiene. One of those mentioned may be used alone, or two or more of those mentioned may be used in combination.

The binding agent may be an elastomer because elastomers have excellent binding properties. Elastomers are polymers having rubber elasticity. The elastomer for use as a binding agent may be a thermoplastic elastomer or a thermosetting elastomer. The binding agent may include a thermoplastic elastomer. Examples of the thermoplastic elastomer include styrene-ethylene-butylene-styrene (SEBS), styrene-ethylene-propylene-styrene (SEPS), styrene-ethylene-ethylene-propylene-styrene (SEEPS), butylene rubbers (BR), isoprene rubbers (IR), chloroprene rubbers (CR), acrylonitrile-butadiene rubbers (NBR), styrene-butylene rubbers (SBR), styrene-butadiene-styrene (SBS), styrene-isoprene-styrene (SIS), hydrogenated isoprene rubbers (HIR), hydrogenated butyl rubbers (HIIR), hydrogenated nitrile rubbers (HNBR), hydrogenated styrene-butylene rubber (HSBR), polyvinylidene fluoride (PVdF), and polytetrafluoroethylene (PTFE). One of these may be used alone, or two or more of these may be used in combination.

A conductive additive may be included in the coating layer 102 to enhance electron conductivity. Examples of the conductive additive include graphites, such as natural graphite and artificial graphite; carbon blacks, such as acetylene black and Ketjen black; conductive fibers, such as carbon fibers and metal fibers; carbon fluoride; metal powders, such as aluminum powders; conductive whiskers, such as zinc oxide whiskers and potassium titanate whiskers; conductive metal oxides, such as titanium oxide; and conductive polymers, such as polyaniline, polypyrrole, and polythiophene. In instances where a conductive carbon additive is used, cost reduction can be achieved.

Any of the above-mentioned conductive additives may be included in the positive electrode material 10 to enhance electron conductivity.

<Method for Producing Coated Active Material>

The coated active material 100 can be produced in the following manner.

A mixture is prepared by mixing a powder of the positive electrode active material 101 with a powder of the first solid electrolyte in an appropriate ratio. The mixture is subjected to a milling process, in which mechanical energy is applied to the mixture. The milling process can be carried out with a mixer, such as a ball mill. The milling process may be performed in a dry and inert atmosphere so that oxidation of the materials can be inhibited.

The coated active material 100 may be produced with a dry particle-composing method. A process that uses the dry particle-composing method includes applying at least one type of mechanical energy selected from the group consisting of impact, compression, and shear to the positive electrode active material 101 and the first solid electrolyte. The ratio at which the positive electrode active material 101 is mixed with the first solid electrolyte is to be appropriate.

A machine that is used in the production of the coated active material 100 is not particularly limited and may be a machine that can apply mechanical energy of impact, compression, and shear to the mixture containing the positive electrode active material 101 and the first solid electrolyte. The machine that can apply mechanical energy may be a compression-shear processing machine (particle-composing machine), such as a ball mill, Mechanofusion (manufactured by Hosokawa Micron Corporation), or Nobilta (manufactured by Hosokawa Micron Corporation).

Mechanofusion is a particle-composing machine that uses a dry mechanical composing technique, which involves applying high mechanical energy to several different raw material powders. In Mechanofusion, raw material powders loaded between a rotating vessel and a press head are subjected to mechanical energy of compression, shear, and friction. Accordingly, the particles form a composite.

Nobilta is a particle-composing machine that uses a dry mechanical composing technique that has evolved from a particle-composing technique, to carry out the composing of nanoparticles used as a raw material. Nobilta produces composite particles by applying mechanical energy of impact, compression, and shear to several types of raw material powders.

Nobilta includes a horizontal cylindrical mixing vessel, in which a rotor is positioned with a predetermined gap between the rotor and an inner wall of the mixing vessel; with high-speed rotation of the rotor, the raw material powders are forcibly passed through the gap, and this process is repeated multiple times. Accordingly, a force of impact, compression, and shear acts on the mixture, and, consequently, composite particles formed of the positive electrode active material 101 and the first solid electrolyte can be produced. Conditions, such as a rotation speed of the rotor, a process time, and amounts of charge, can be adjusted to control the thickness of the coating layer 102, a percentage of coverage of the positive electrode active material 101 with the first solid electrolyte, and the like.

Note that the process using any of the above-mentioned machines is not essential. The coated active material 100 may be produced by mixing the positive electrode active material 101 with the first solid electrolyte in a mortar, a mixer, or the like. The first solid electrolyte may be deposited onto the surface of the positive electrode active material 101 by using any of a variety of methods, such as a spray method, a spray-dry coating method, an electrodeposition method, a dipping method, and a mechanical mixing method that uses a dispersing machine.

<Method for Producing Positive Electrode Material>

The positive electrode material 10 can be prepared by mixing the coated active material 100 with the second solid electrolyte 105. Methods for mixing the coated active material 100 with the second solid electrolyte 105 are not particularly limited. The coated active material 100 may be mixed with the second solid electrolyte 105 in a device, such as a mortar, or the coated active material 100 may be mixed with the second solid electrolyte 105 in a mixer, such as a ball mill.

(Modification)

Fig. 2 is a cross-sectional view illustrating a schematic configuration of a positive electrode material 20, according to a modification. The positive electrode material 20 includes a coated active material 110 and a second solid electrolyte 105. The coated active material 110 includes a positive electrode active material 101 and a coating layer 104. The coating layer 104 includes a first coating layer 102 and a second coating layer 103. The first coating layer 102 is a layer containing the first solid electrolyte. The second coating layer 103 is a layer containing a base material. The first coating layer 102 is located outside of the second coating layer 103. With this configuration, an increase in the internal resistance of a battery can be further inhibited.

The first coating layer 102 is a layer corresponding to the coating layer 102 described above with reference to Fig. 1.

The second coating layer 103 is located between the first coating layer 102 and the positive electrode active material 101. In this modification, the second coating layer 103 is in direct contact with the positive electrode active material 101. The base material that is included in the second coating layer 103 may be a material having low electron conductivity, such as an oxide material or an oxide solid electrolyte.

Examples of the oxide material include $SiO_2$, $Al_2O_3$, $TiO_2$, $B_2O_3$, $Nb_2O_5$, $WO_3$, and $ZrO_2$. Examples of the oxide solid electrolyte include Li-Nb-O compounds, such as $LiNbO_3$; Li-B-O compounds, such as $LiBO_2$ and $Li_3BO_3$; Li-Al-O compounds, such as $LiAlO_2$; Li-Si-O compounds, such as $Li_4SiO_4$; $Li_2SO_4$; Li-Ti-O compounds, such as $Li_4Ti_5O_{12}$; Li-Zr-O compounds, such as $Li_2ZrO_3$; Li-Mo-O compounds, such as $Li_2MoO_3$; Li-V-O compounds, such as $LiV_2O_5$; and Li-W-O compounds, such as $Li_2WO_4$. The base material may be one of these or a mixture of two or more of these.

The base material may be a solid electrolyte having lithium ion conductivity. Typically, the base material is an oxide solid electrolyte having lithium ion conductivity. Oxide solid electrolytes have high ionic conductivity and excellent high-potential stability. In the instance where an oxide solid electrolyte is used as the base material, the charge-discharge efficiency of a battery can be improved.

The base material may be a material containing Nb. Typically, the base material includes lithium niobate $(LiNbO_3)$. With this configuration, the charge-discharge efficiency of a battery can be improved. The oxide solid electrolyte that serves as the base material may be any of the materials described above.

In one example, the ionic conductivity of the halide solid electrolyte present in the first coating layer 102 is higher than the ionic conductivity of the base material present in the second coating layer 103. With this configuration, oxidation of the second solid electrolyte 105 can be further inhibited without compromising the ionic conductivity.

The first coating layer 102 has a thickness of, for example, greater than or equal to 1 nm and less than or equal to 500 nm. The second coating layer 103 has a thickness of, for example, greater than or equal to 1 nm and less than or equal to 500 nm. In the instance where the thicknesses of the first coating layer 102 and the second coating layer 103 are appropriately adjusted, contact between the positive electrode active material 101 and the second solid electrolyte 105 can be sufficiently inhibited. The thickness of the layers can be determined with the method previously described.

<Method for Producing Coated Active Material>

The coated active material 110 can be produced in the following manner.

First, the second coating layer 103 is formed on a surface of the positive electrode active material 101. Methods for forming the second coating layer 103 are not particularly limited. Examples of the methods for forming the second coating layer 103 include liquid-phase coating methods and vapor-phase coating methods.

For example, a liquid-phase coating method is as follows. A precursor solution for the base material is applied to the surface of the positive electrode active material 101. In instances where a second coating layer 103 containing $LiNbO_3$ is to be formed, the precursor solution may be a mixed solution (sol solution) of a solvent, a lithium alkoxide, and a niobium alkoxide. Examples of the lithium alkoxide include lithium ethoxide. Examples of the niobium alkoxide include niobium ethoxide. Examples of the solvent include alcohols, such as ethanol. Amounts of the lithium alkoxide and the niobium alkoxide are to be adjusted in accordance with a target composition of the second coating layer 103. If necessary, water may be added to the precursor solution. The precursor solution may be acidic or alkaline.

Methods for applying the precursor solution to the surface of the positive electrode active material 101 are not particularly limited. For example, the precursor solution can be applied to the surface of the positive electrode active material 101 in a tumbling fluidized bed granulating-coating machine. The tumbling fluidized bed granulating-coating machine can apply the precursor solution to the surface of the positive electrode active material 101 by spraying the precursor solution onto the positive electrode active material 101 while tumbling and fluidizing the positive electrode active material 101. Accordingly, a precursor coating is formed on the surface of the positive electrode active material 101. Subsequently, the positive electrode active material 101 coated with the precursor coating is heat-treated. The heat treatment causes the gelation of the precursor coating to proceed, which leads to the formation of the second coating layer 103.

Examples of the vapor-phase coating methods include pulsed laser deposition (PLD) methods, vacuum vapor deposition methods, sputtering methods, thermal chemical vapor deposition (CVD) methods, and plasma chemical vapor deposition methods. The PLD methods are carried out, for example, as follows. A high-energy pulsed laser (e.g., a KrF excimer laser, wavelength: 248 nm) is applied onto an ion-conducting material used as a target, to cause the sublimed ion-conducting material to be deposited onto the surface of the positive electrode active material 101. In instances where a second coating layer 103 of $LiNbO_3$ is to be formed, the target to be used is densely sintered $LiNbO_3$.

Note that the method for forming the second coating layer 103 is not limited to the methods mentioned above. The second coating layer 103 may be formed with any of a variety of methods, such as a spray method, a spray-dry coating method, an electrodeposition method, a dipping method, and a mechanical mixing method that uses a dispersing machine.

After the second coating layer 103 has been formed, the first coating layer 102 is formed with the method previously described. Accordingly, the coated active material 110 can be obtained.

(Second Embodiment)

Fig. 3 is a cross-sectional view illustrating a schematic configuration of a battery according to a second embodiment. A battery 200 includes a positive electrode 201, a separator layer 202, and a negative electrode 203. The separator layer 202 is disposed between the positive electrode 201 and the negative electrode 203. The positive electrode 201 includes at least one of the positive electrode material 10 and the positive electrode material 20, both described in the first embodiment. With this configuration, an increase in the internal resistance of the battery 200 can be inhibited.

The positive electrode 201 and the negative electrode 203 may each have a thickness of greater than or equal to 10 $\mu$m and less than or equal to 500 $\mu$m. When the thicknesses of the positive electrode 201 and the negative electrode 203 are greater than or equal to 10 $\mu$m, a sufficient energy density of the battery can be ensured. When the thicknesses of the positive electrode 201 and the negative electrode 203 are less than or equal to 500 $\mu$m, a high-power operation of the battery 200 can be achieved.

The separator layer 202 is a layer containing an electrolyte material. The separator layer 202 may include at least one solid electrolyte selected from the group consisting of a sulfide solid electrolyte, an oxide solid electrolyte, a halide solid electrolyte, a polymeric solid electrolyte, and a complex hydride solid electrolyte. Details of the solid electrolytes are as described in the first embodiment.

The separator layer 202 may have a thickness of greater than or equal to 1 $\mu$m and less than or equal to 300 $\mu$m. When the thickness of the separator layer 202 is greater than or equal to 1 $\mu$m, the positive electrode 201 and the negative electrode 203 can be separated from each other more reliably. When the thickness of the separator layer 202 is less than or equal to 300 $\mu$m, a high-power operation of the battery 200 can be achieved.

The negative electrode 203 includes a negative electrode active material that is a material having a property of occluding and releasing metal ions (e.g., lithium ions).

Examples of the negative electrode active material include metal materials, carbon materials, oxides, nitrides, tin compounds, and silicon compounds. The metal materials may be elemental metals. The metal materials may be alloys. Examples of the metal materials include lithium metals and lithium alloys. Examples of the carbon materials include natural graphite, coke, partially graphitized carbon, carbon fibers, spherical carbon, artificial graphite, and amorphous carbon. Silicon (Si), tin (Sn), a silicon compound, a tin compound, or the like may be used; these are suitable from the standpoint of a capacity density.

Particles of the negative electrode active material may have a median diameter of greater than or equal to 0.1 $\mu$m and less than or equal to 100 $\mu$m.

The negative electrode 203 may include one or more additional materials, such as a solid electrolyte. The solid electrolyte may be any of the materials described in the first embodiment.

EXAMPLES

Details of the present disclosure will now be described with reference to Examples and a Reference Example. Note that electrodes and batteries of the present disclosure are not limited to those described in the Examples below.

EXAMPLE 1

[Preparation of First Solid Electrolyte]

In an argon glove box with a dew point of -60°C or less, raw material powders of LiF, $TiF_4$, and $AlF_3$ were weighed in a molar ratio of $LiF:TiF_4:AlF_3 = 2.5:0.5:0.5$. These were ground and mixed in a mortar to form a mixture. The mixture was subjected to a milling process, which was performed in a planetary ball mill under the conditions of 500 rpm and 12 hours. In this manner, a powder of a halide solid electrolyte, which served as the first solid electrolyte in Example 1, was prepared. The halide solid electrolyte of Example 1 had a composition represented by $Li_{2.5}Ti_{0.5}Al_{0.5}F_6$ (hereinafter denoted as "LTAF").

[Preparation of Coated Active Material]

A powder of $Li(Ni,Co,Al)O_2$ (hereinafter denoted as "NCA") was provided to be used as the positive electrode active material. Next, a coating layer made of the LTAF was formed on the NCA. The coating layer was formed with a compression-shear process in a particle composing machine (NOB-MINI, manufactured by Hosokawa Micron Corporation). Specifically, the NCA and the LTAF were weighed in a volume ratio of NCA to LTAF of 98:2, and the process was carried out under the conditions of a blade clearance of 2 mm, a rotational speed of 6000 rpm, and a process time of 50 min. In this manner, a coated active material of Example 1 was prepared.

EXAMPLE 2

A coated active material of Example 2 was prepared in the same manner as in Example 1, except that the volume ratio of NCA to LTAF was changed to 97:3.

EXAMPLE 3

A coated active material of Example 3 was prepared in the same manner as in Example 1, except that the volume ratio of NCA to LTAF was changed to 95.4:4.6.

EXAMPLE 4

A coated active material of Example 4 was prepared in the same manner as in Example 1, except that the volume ratio of NCA to LTAF was changed to 93:7.

EXAMPLE 5

A coated active material of Example 5 was prepared in the same manner as in Example 1, except that the volume ratio of NCA to LTAF was changed to 90:10.

EXAMPLE 6

A coated active material of Example 6 was prepared in the same manner as in Example 1, except that the volume ratio of NCA to LTAF was changed to 85:15.

REFERENCE EXAMPLE 1

The NCA, without the coating of the LTAF, was used as the active material of Reference Example 1.

[Preparation of Second Solid Electrolyte]

In an argon glove box with a dew point of -60°C or less, raw material powders of $Li_2S$ and $P_2S_5$ were weighed in a molar ratio of $Li_2S:P_2S_5$ = 75:25. These were ground and mixed in a mortar to form a mixture. Subsequently, the mixture was subjected to a milling process, which was performed in a planetary ball mill (P-7 model, manufactured by Fritsch) under the conditions of 510 rpm and 10 hours. In this manner, a glassy solid electrolyte was prepared. The glassy solid electrolyte was heat-treated in an inert atmosphere under the conditions of 270°C and 2 hours. In this manner, $Li_2S$-$P_2S_5$ (hereinafter denoted as "LPS"), which was a glass-ceramic sulfide solid electrolyte and served as the second solid electrolyte in Example 1, was prepared.

[Preparation of Positive Electrode Material]

In an argon glove box, the coated active material and the second solid electrolyte of Example 1 were weighed in a volume ratio of the NCA to the solid electrolytes of 70:30 and in a volume ratio of the first solid electrolyte (LTAF) to the second solid electrolyte (LPS) of 4.8:95.2. These were mixed in an agate mortar to give a positive electrode material of Example 1. Regarding the volume ratio of the NCA to the solid electrolytes, the "solid electrolytes" means the total volume of the first solid electrolyte (LTAF) and the second solid electrolyte (LPS).
Positive electrode materials of Examples 2 to 6 and Reference Example 1 were prepared in the same manner as in Example 1. In the positive electrode materials of the examples, the ratio V1/Vt, which is a ratio of V1 to Vt expressed in a percentage, was as shown in Table 1; V1 is the volume of the first solid electrolyte (LTAF), and Vt is the total volume of the first solid electrolyte and the second solid electrolyte (LPS).

[Preparation of Battery]

The positive electrode materials were each weighed such that 14 mg of the NCA was present therein. In an insulating cylinder, LPS and the positive electrode material were stacked in the order stated. The resulting multilayer body was pressure-molded at a pressure of 720 MPa. Next, lithium metal was placed in contact with the LPS layer, and the resultant was pressure-molded again at a pressure of 40 MPa. In this manner, a multilayer body formed of a positive electrode, a separator layer, and a negative electrode was prepared. Next, a stainless steel current collector was placed on upper and lower sides of the multilayer body. A current collector lead was attached to each of the current collectors. Next, the cylinder was sealed with an insulating ferrule to isolate the interior of the cylinder from the ambient environment. Through these steps, batteries of Examples 1 to 6 and Reference Example 1 were produced. The batteries were each constrained with four bolts from upper and lower sides to apply an interface pressure of 150 MPa to the batteries.

[Evaluation of Ratio of Resistance Value Obtained After Charge-Discharge Cycles to Resistance Value Obtained Before Charge-Discharge Cycles]

A charge-discharge test was conducted on the batteries of the Examples and the Reference Example under the conditions described below, and a ratio of a resistance value obtained after charge-discharge cycles to a resistance value obtained before the charge-discharge cycles was evaluated.

(Charge-Discharge Test)

First, the batteries were placed in a constant-temperature chamber at 25°C.
The batteries were charged at a constant current of 147 µA, which was a current value corresponding to a 0.05 C rate (20 hour rate), where the C rate was a rate with respect to a theoretical capacity of the batteries, until a voltage of 4.3 V was reached. Thereafter, an electrochemical impedance measurement was performed at frequencies ranging from 1 MHz to 0.01 Hz with an amplitude of 10 mV. The term "charged" refers to a state in which a current flows in a direction of lithium ion movement from the positive electrode that contains NCA to the Li metal (i.e., the negative electrode). The measurement was carried out with a potentiostat (VMP-300, manufactured by Bio-Logic) equipped with a frequency response analyzer. The measurement temperature was 25°C.
Next, the batteries were discharged at a constant current of 147 µA, which was a current value corresponding to a 0.05 C rate (20 hour rate), where the C rate was a rate with respect to the theoretical capacity of the batteries, until a voltage of 2.5 V was reached. The term "discharged" refers to a state in which a current flows in a direction of lithium ion movement from the Li metal (i.e., the negative electrode) to the positive electrode that contains NCA.

Next, an internal temperature of the constant-temperature chamber was changed to 60°C, and 60 cycles of charging and discharging were performed at 5.88 mA, which was a current value corresponding to a 2 C rate (1/2 hour rate).

Next, the internal temperature of the constant-temperature chamber was returned to 25°C, and the batteries were charged at a constant current of 147 μA, which was a current value corresponding to a 0.05 C rate (20 hour rate), where the C rate was a rate with respect to the theoretical capacity of the batteries, until a voltage of 4.3 V was reached. Thereafter, the electrochemical impedance measurement was performed at frequencies ranging from 1 MHz to 0.01 Hz with an amplitude of 10 mV.

Next, the batteries were discharged at a constant current of 147 μA, which was a current value corresponding to a 0.05 C rate (20 hour rate), where the C rate was a rate with respect to the theoretical capacity of the batteries, until a voltage of 2.5 V was reached.

(Analysis of Resistance)

Regarding the results of the electrochemical impedance measurements performed before and after the charge-discharge cycles, the resistance values of the batteries before and after the charge-discharge cycles were calculated in the manner described below.

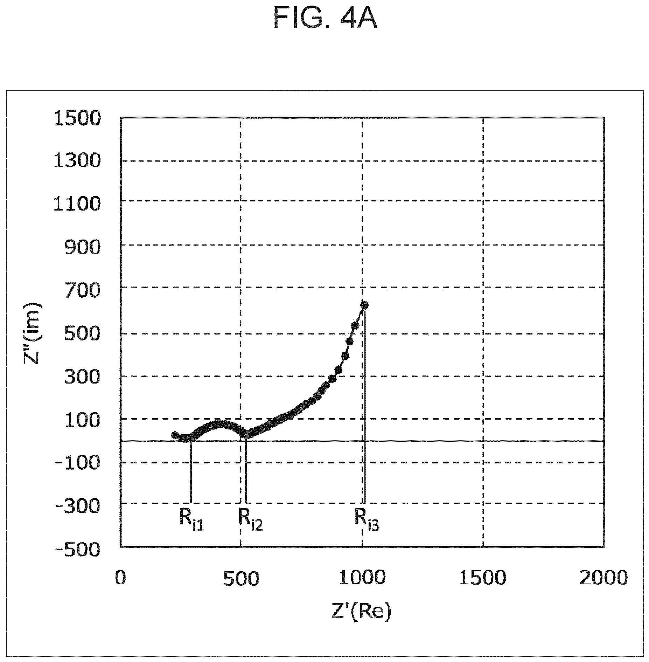

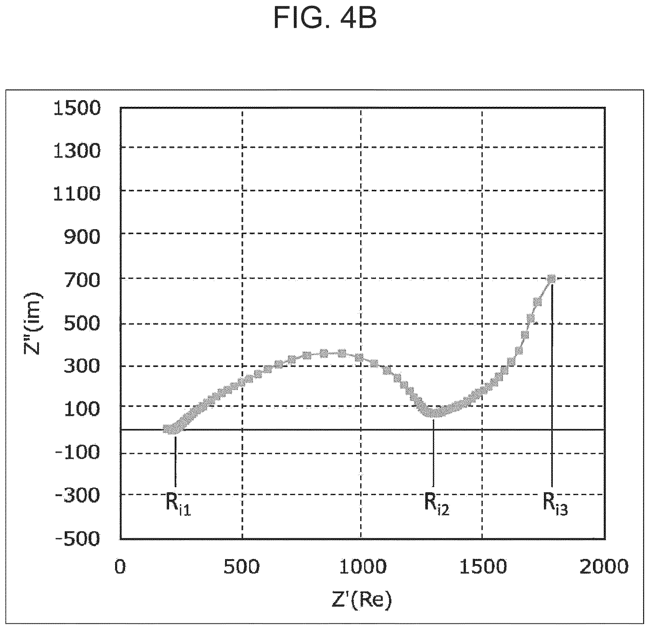

Fig. 4A is a graph showing a Cole-Cole plot obtained in the electrochemical impedance measurement performed on the battery of Example 1 before the charge-discharge cycles. Fig. 4B is a graph showing a Cole-Cole plot obtained in the electrochemical impedance measurement performed on the battery of Example 1 after the charge-discharge cycles. In Figs. 4A and 4B, the vertical axis represents the imaginary part of the impedance, and the horizontal axis represents the real part of the impedance.

As shown in the Cole-Cole plots of Figs. 4A and 4B, there are roughly three types of resistance components: a resistance (bulk resistance) exhibited over a range up to a point Ri; a resistance (charge transfer resistance) exhibited over a range starting from the point Ri and ending at a point $R_2$; and a resistance (ion diffusion resistance) exhibited over a range starting from the point $R_2$ and ending at a point $R_3$. The resistance exhibited over the range starting from the point Ri and ending at the point $R_2$, which corresponds to the difference between the real value at the point $R_2$ and the real value at the point $R_1$, is considered to be the resistance value of the battery. By using the Cole-Cole plots of the Examples and the Reference Example, the resistance value, R, of the batteries before and after the charge-discharge cycles was calculated from the real values at the point Ri and the point $R_2$, according to Equation 1, shown below. The results are shown in Table 1.

$$R = R_2 - R_1 \qquad \text{(Equation 1)}$$

For each of the Examples and the Reference Example, a ratio $R_i$ (%) was calculated from a resistance value $R_b$ of the battery, which is a value obtained before the charge-discharge cycles, and a resistance value $R_a$ of the battery, which is a value obtained after the charge-discharge cycle. The ratio $R_i$ is a ratio of the resistance value $R_a$ obtained after the charge-discharge cycle to the resistance value $R_b$ obtained before the charge-discharge cycles. Specifically, the ratio $R_i$ (%) was calculated according to Equation 2, shown below. The results are shown in Table 1.

$$R_i = (R_a/R_b) \times 100 \qquad \text{(Equation 2)}$$

[Table 1]

| | LTAF/ (LTAF+NCA) (vol.%) | V1/Vt (LTAF/ (LTAF+LPS)) (vol.%) | Resistance value Rb obtained before charge-discharge cycles (Ω) | Resistance value Ra obtained after charge-discharge cycles (Ω) | Ratio Ri (%) |
|---|---|---|---|---|---|
| Reference Example 1 | 0 | 0 | 402 | 1293 | 322 |
| Example 1 | 2 | 4.8 | 76 | 90 | 118 |
| Example 2 | 3 | 7.2 | 63 | 73 | 116 |
| Example 3 | 4.6 | 11.3 | 157 | 71 | 45 |
| Example 4 | 7 | 17.6 | 91 | 59 | 65 |

(continued)

| | LTAF/ (LTAF+NCA) (vol.%) | V1/Vt (LTAF/ (LTAF+LPS)) (vol.%) | Resistance value Rb obtained before charge-discharge cycles ($\Omega$) | Resistance value Ra obtained after charge-discharge cycles ($\Omega$) | Ratio Ri (%) |
|---|---|---|---|---|---|
| Example 5 | 10 | 25.9 | 70 | 56 | 80 |
| Example 6 | 15 | 41.2 | 67 | 75 | 112 |

<Discussion>

Table 1 shows that in Examples 1 to 6, in which the positive electrode active material had the halide solid electrolyte coated thereon, the ratio of the resistance value obtained after the charge-discharge cycles to the resistance value obtained before the charge-discharge cycles was not high. Presumably, one reason for this is that the coating layer containing the halide solid electrolyte inhibited a reaction between the sulfide solid electrolyte and oxygen released from the positive electrode active material. Thus, in Examples 1 to 6, an increase in the internal resistance of the batteries was inhibited.

In particular, in Examples 3, 4, and 5, the internal resistance was reduced. Specifically, the internal resistance of the battery was reduced in the instance in which the ratio V1/Vt, which is a ratio of the volume of the first solid electrolyte to the total volume of the first solid electrolyte (LTAF) and the second solid electrolyte (LPS), was greater than or equal to 8% and less than or equal to 30%. Presumably, one reason for this is that the positive electrode active material 101 was sufficiently coated with the first solid electrolyte, with the ratio V1/Vt being greater than or equal to 8%. Presumably, another reason for this is that a sufficient electron conductivity and ionic conductivity of the positive electrode material were ensured, with the ratio V1/Vt being less than or equal to 40%.

Note that Al may be replaced with at least one selected from the group consisting of metalloid elements and metal elements other than Li or Ti, such as Ca, Mg, Al, Y, and Zr; even in such cases, the halide solid electrolyte has a comparable ionic conductivity, which has been previously confirmed (e.g., in Japanese Patent Application No. 2020-048461, filed by the applicant of the present application). Accordingly, it is possible to use a halide solid electrolyte that contains, instead of Al or together with Al, at least one selected from the group consisting of the mentioned elements. Even in this instance, the charging and discharging of the battery is possible, and the effect of inhibiting an increase in the resistance by inhibiting an oxidation reaction of a sulfide solid electrolyte can be produced.

The oxidation of the sulfide solid electrolyte occurs mainly when contact of the sulfide solid electrolyte with the positive electrode active material causes electrons to be withdrawn from the sulfide solid electrolyte. Accordingly, the technology of the present disclosure can produce the effect of inhibiting the oxidation of a sulfide solid electrolyte even in instances in which an active material other than NCAs is used.

Industrial Applicability

The technology of the present disclosure is useful, for example, in an all-solid-state lithium secondary battery.

Reference Signs List

    10, 20 positive electrode material
    100, 110 coated active material
    101 positive electrode active material
    102 first coating layer
    103 second coating layer
    104 coating layer
    105 second solid electrolyte
    200 battery
    201 positive electrode
    202 separator layer
    203 negative electrode

**Claims**

1. A positive electrode material comprising:

  a positive electrode active material;
  a coating layer containing a first solid electrolyte and coating at least a portion of a surface of the positive electrode active material; and
  a second solid electrolyte, wherein
  the first solid electrolyte contains Li, Ti, M, and X, where M is at least one selected from the group consisting of metalloid elements and metal elements other than Li or Ti, and X is at least one selected from the group consisting of F, Cl, Br, and I,
  the second solid electrolyte is in indirect contact with the positive electrode active material with the coating layer disposed between the second solid electrolyte and the positive electrode active material, and
  a ratio of a volume of the first solid electrolyte to a total volume of the first solid electrolyte and the second solid electrolyte is greater than or equal to 4% and less than or equal to 45%.

2. The positive electrode material according to claim 1, wherein the ratio is greater than or equal to 4.8%.

3. The positive electrode material according to claim 1 or 2, wherein the ratio is less than or equal to 41.2%.

4. The positive electrode material according to claim 1, wherein the ratio is greater than or equal to 8%.

5. The positive electrode material according to claim 1 or 2, wherein the ratio is less than or equal to 30%.

6. The positive electrode material according to any one of claims 1 to 5, wherein the second solid electrolyte contains Li and S.

7.  The positive electrode material according to any one of claims 1 to 6, wherein M includes at least one selected from the group consisting of Ca, Mg, Al, Y, and Zr.

8. The positive electrode material according to any one of claims 1 to 7, wherein M includes Al.

9. The positive electrode material according to any one of claims 1 to 8, wherein the first solid electrolyte is represented by Formula 1:

$$Li_{\alpha}Ti_{\beta}M_{\gamma}X_{\delta} \qquad \text{(Formula 1)}$$

where $\alpha$, $\beta$, $\gamma$, and $\delta$ are each independently a value greater than 0.

10. The positive electrode material according to any one of claims 1 to 9, wherein

  the coating layer includes a first coating layer and a second coating layer, the first coating layer contains the first solid electrolyte, and the second coating layer contains a base material, and
  the first coating layer is located outside of the second coating layer.

11. The positive electrode material according to claim 10, wherein the base material contains an oxide solid electrolyte having lithium ion conductivity.

12. The positive electrode material according to claim 10 or 11, wherein the base material contains lithium niobate.

13. A positive electrode comprising the positive electrode material according to any one of claims 1 to 12.

14. A battery comprising the positive electrode according to claim 13.

# FIG. 1

# FIG. 2

# FIG. 3

# FIG. 4A

# FIG. 4B

## INTERNATIONAL SEARCH REPORT

| International application No. |
|---|
| **PCT/JP2022/028285** |

**A. CLASSIFICATION OF SUBJECT MATTER**

*H01M 4/13*(2010.01)i; *C01B 25/14*(2006.01)i; *C01G 23/00*(2006.01)i; *C01G 53/00*(2006.01)i; *H01M 4/36*(2006.01)i; *H01M 4/62*(2006.01)i; *H01M 10/052*(2010.01)i; *H01M 10/0562*(2010.01)i

FI: H01M4/13; H01M4/36 C; H01M4/62 Z; H01M10/052; H01M10/0562; C01B25/14; C01G23/00 C; C01G53/00 A

According to International Patent Classification (IPC) or to both national classification and IPC

**B. FIELDS SEARCHED**

Minimum documentation searched (classification system followed by classification symbols)

H01M4/13; C01B25/14; C01G23/00; C01G53/00; H01M4/36; H01M4/62; H01M10/052; H01M10/0562

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2019/146236 A1 (PANASONIC INTELLECTUAL PROPERTY MANAGEMENT CO., LTD.) 01 August 2019 (2019-08-01) | 1-14 |
| A | WO 2021/157361 A1 (PANASONIC CORP.) 12 August 2021 (2021-08-12) | 1-14 |
| A | WO 2019/135322 A1 (PANASONIC INTELLECTUAL PROPERTY MANAGEMENT CO., LTD.) 11 July 2019 (2019-07-11) | 1-14 |
| P, A | WO 2021/187391 A1 (PANASONIC INTELLECTUAL PROPERTY MANAGEMENT CO., LTD.) 23 September 2021 (2021-09-23) | 1-14 |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **20 September 2022** | **04 October 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**
**Information on patent family members**

| International application No. |
| --- |
| **PCT/JP2022/028285** |

| Patent document cited in search report | | | Publication date (day/month/year) | Patent family member(s) | | | Publication date (day/month/year) |
| --- | --- | --- | --- | --- | --- | --- | --- |
| WO | 2019/146236 | A1 | 01 August 2019 | US | 2020/0350626 | A1 | |
| | | | | EP | 3745499 | A1 | |
| | | | | CN | 111566851 | A | |
| WO | 2021/157361 | A1 | 12 August 2021 | (Family: none) | | | |
| WO | 2019/135322 | A1 | 11 July 2019 | US | 2020/0328467 | A1 | |
| | | | | EP | 3736892 | A1 | |
| | | | | CN | 111492517 | A | |
| WO | 2021/187391 | A1 | 23 September 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016018735 A

- JP 2020048461 A